# EUROPEAN PATENT SPECIFICATION

(11) **EP 3 326 815 B1**
(45) Date of publication and mention of the grant of the patent: **03.03.2021**
(21) Application number: 17179931.5
(22) Date of filing: 06.07.2017
(51) Int. Cl.: B32B 41/00, B32B 38/18, B32B 38/06, B32B 38/14, E04F 15/02

(54) **METHOD OF FORMING LAYERING STRUCTURE OF PLASTIC FLOORING**
VERFAHREN ZUR HERSTELLUNG EINER SCHICHTSTRUKTUR EINES KUNSTSTOFFBODENBELAGS
PROCÉDÉ DE FORMATION D'UNE STRUCTURE EN COUCHES DE REVÊTEMENT DE SOL EN PLASTIQUE

(30) Priority: 23.11.2016 CN 201611047571
(43) Date of publication of application: 30.05.2018
(73) Proprietor: Lu, Ding Yi, Jiangsu (CN); Jhao, Pei Dong, Tainan City 71247 (TW)
(72) Inventor: Lu, Ding Yi, Jiangsu (CN); Jhao, Pei Dong, Tainan City 71247 (TW)
(74) Representative: Cabinet Chaillot

(56) References cited:
- WO-A1-2016/016864
- CN-A- 105 711 226
- US-A- 4 312 686
- US-A1- 2015 360 504

## Description

### FIELD OF THE INVENTION

The present invention relates to a method of forming layering structure of plastic flooring which has registration patterns on the plastic flooring.

### BACKGROUND OF THE INVENTION

Conventional plastic flooring contains: a substrate, a printing film and abrasion resistance film which are pressed by three press rollers or six press rollers of a rolling machine so as to form three-dimensional patterns thereon. However, the substrate and the printing film cannot be conveyed synchronously, so the substrate cannot correspond to pressing patterns of the printing film, and a depressed part and the raised part of the pressing patterns cannot align with a pattern portion of each press roller accurately.

The present invention has arisen to mitigate and/or obviate the afore-described disadvantages.

WO 2016/016864 A1 discloses a method for forming a layering structure of plastic flooring according to the preamble of claim 1.

CN 105 711 226 A discloses a four-roll calendering and draping production device for PVC plastic floor surface film attachment. The four-roll calendering and draping production device comprises a four-roll calender, a wear-proof film unwinding mechanism, a printing film unwinding mechanism, a wear-proof film attaching mechanism, a printing film attaching mechanism and a guide-out mechanism. The printing film unwinding mechanism and the wear-proof film unwinding mechanism are installed on the two sides of the top end of the four-roll calender respectively. The wear-proof film attaching mechanism, the printing film attaching mechanism and the guide-out mechanism are sequentially arranged on the right side of a shading roll from top to bottom. The wear-proof film attaching mechanism is obliquely arranged on the right side of the shading roll. The printing film attaching mechanism and the guide-out mechanism are parallelly arranged on the right side of the shading roll. According to the four-roll calendering and draping production device, a vertical design is adopted, and a lower mirror roll and an upper mirror roll are used for determination of thickness; air is evenly extruded and exhausted by means of false attachment of a first guide-out roll in the printing film attaching mechanism, a PVC bottom board, a printing film and a wear-proof film can be more easily bound firmly, and production becomes convenient, simple and stable.

### SUMMARY OF THE INVENTION

The primary objective of the present invention is to provide a method of forming a layering structure of plastic flooring which produces stiff and flexible plastic flooring.

Another objective of the present invention is to provide a method of forming layering structure of plastic flooring which manufactures the plastic flowing in an automation manner.

The method of forming layering structure of plastic flooring of the present invention is as defined in claim 1.

To obtain the above objectives, a layering structure of plastic flooring provided by the present invention is formed by way of an extruder, a rolling conveyor, and a roller unit, and the plastic flooring contains: a substrate, a printing layer, and an abrasion resistant layer.

The substrate includes three sheets which are one-piece extrusion formed by using the extruder so that the sheets stack together.

The printing layer is arranged on a top of the substrate and has patterns printed thereon.

The abrasion resistant layer is formed on the printing layer.

After the substrate is one-piece extrusion formed, the printing layer and the abrasion resistant layer are conveyed to the roller unit by the rolling conveyor so that the substrate, the printing layer, and the abrasion resistant layer are rolled and pressed together by the roller unit.

The roller unit includes a first roller, a second roller, a third roller, two fourth rollers, and a support frame, wherein the first roller is fixed on an end of the support frame, the second roller is located on the first roller, the third roller is disposed beside the first roller and the second roller, and the two fourth rollers are secured beside the third roller opposite to the first roller and the second roller, , wherein
the substrate is guided between the first roller and the second roller and is guided to the third roller via a first guide roller;
the printing layer is guided to the third roller via a guide roller and a first press roller, and the abrasion resistant layer is guided to the third roller through a third guide roller and a second press roller;
the printing layer is stacked on the substrate, and the abrasion resistant layer is stacked on the printing layer by using the third roller, then the substrate, the printing layer, and the abrasion resistant layer are guided to the two fourth rollers via a fourth guide roller;
the substrate, the printing layer, and the abrasion resistant layer are rolled and pressed together by the two fourth rollers of the roller unit; and
the plastic flooring is removed from the two fourth rollers and is cut based on required sizes.

In one embodiment, the substrate includes a first sheet made of PVC material in which plasticizer is added so that the first sheet is flexible, and the substrate includes a second sheet located on the firs sheet and made of PVC material in which the plasticizer is not added so that the second sheet is stiff.

In one embodiment, the substrate includes a first sheet made of PVC material in which plasticizer is not added so that the first sheet is stiff, a second sheet located on the first sheet and made of PVC material in which vesicant is added so that the second sheet is flexible, and a third sheet located on the second sheet and made of PVC material in which the plasticizer is not added so that the third sheet is stiff.

In one embodiment, the substrate includes a first sheet made of PVC material in which plasticizer is added so that the first sheet is flexible, a second sheet located on the first sheet and made of PVC material in which vesicant is added so that the second sheet is flexible, and a third sheet located on the second sheet and made of PVC material in which the plasticizer is not added so that the third sheet is stiff.

In one embodiment, the substrate includes a first sheet made of PVC material in which plasticizer is added so that the first sheet is flexible, a second sheet made of PVC material in which vesicant is not added so that the second sheet is stiff, and a third sheet located on the second sheet and made of PVC material in which the plasticizer is added so that the third sheet is flexible.

In one embodiment, the substrate includes a first sheet made of PVC material in which plasticizer is added so that the first sheet is flexible, a second sheet located on the first sheet and made of PVC material in which gas is fed so that the second sheet foams and is flexible, and a third sheet located on the second sheet and made of PVC material in which the plasticizer is added so that the third sheet is flexible.

Preferably, a pattern part is fixed on a bottom of the substrate and is a PVC film.

Preferably, the rolling conveyor includes a first rolling mechanism for rolling the abrasion resistant layer, a second rolling mechanism for rolling the printing layer, a first pressing mechanism for pressing the abrasion resistant layer, a second pressing mechanism for pressing the printing layer, and a guiding mechanism for guiding the printing layer; wherein the abrasion resistant layer is rolled, pressed, and delivered to the roller unit by way of the second rolling mechanism and the second pressing mechanism; wherein the printing layer is rolled, pressed, and delivered to the roller unit by means of the second rolling mechanism, the second pressing mechanism, and the guiding mechanism.

### BRIEF DESCRIPTION OF THE DRAWINGS

FIG. 1 is a schematic view of a rolling conveyor and a roller unit not forming part of the claimed invention.
FIG. 2 is a schematic view of another roller unit according to a preferred embodiment of the present invention.
FIG. 3 is a schematic view of an extruder according to a preferred embodiment of the present invention.
FIG. 4 is a schematic view showing the assembly of a layering structure of plastic flooring according to a preferred embodiment of the present invention.
FIG. 5 is a schematic view showing the assembly of a layering structure of plastic flooring according to another preferred embodiment of the present invention.
FIG. 6 is a schematic view showing the assembly of a layering structure of plastic flooring according to another preferred embodiment of the present invention.
FIG. 7 is a schematic view showing the assembly of a layering structure of plastic flooring according to another preferred embodiment of the present invention.
FIG. 8 is a schematic view showing the assembly of a layering structure of plastic flooring according to another preferred embodiment of the present invention.
FIG. 9 is a schematic view showing the assembly of a layering structure of plastic flooring according to another preferred embodiment of the present invention.
FIG. 10 is a schematic view showing the assembly of a pattern part and the layering structure of the plastic flooring according to the preferred embodiment of the present invention.

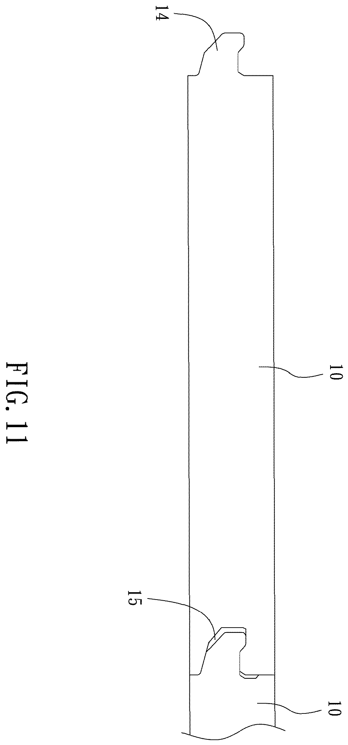

FIG. 11 is a schematic view showing the assembly of the plastic flooring according to the preferred embodiment of the present invention.

### DETAILED DESCRIPTION OF THE PREFERRED EMBODIMENTS

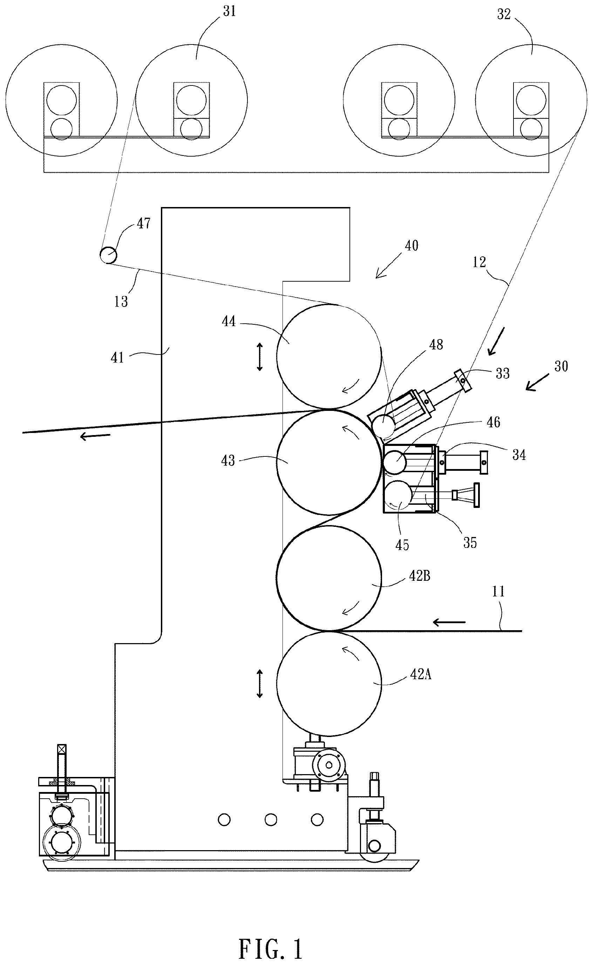

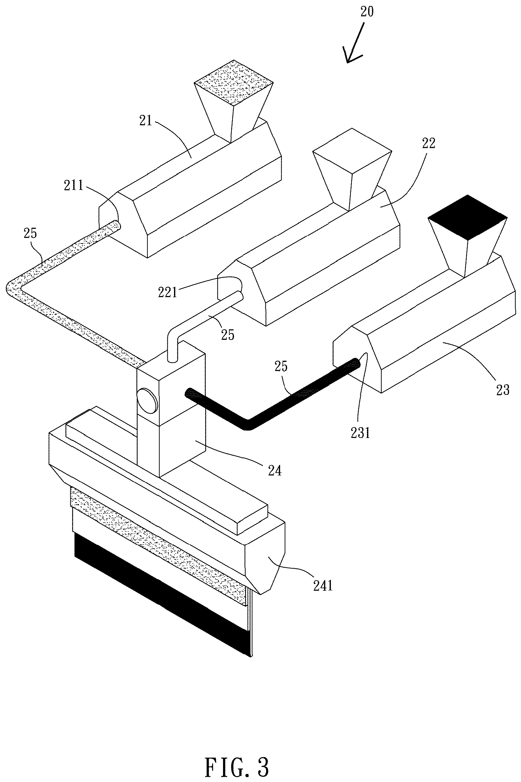

With reference to FIGS. 1 to 10, a method of forming a layering structure of plastic flooring 10 according to a preferred embodiment of the present invention, wherein the plastic flooring 10 comprises a substrate 11, a printing layer 12, and an abrasion resistant layer 13. The substrate 11 includes at least two sheets which are one-piece extrusion formed automatically by using an extruder 20, a rolling conveyor 30, and a roller unit 40.

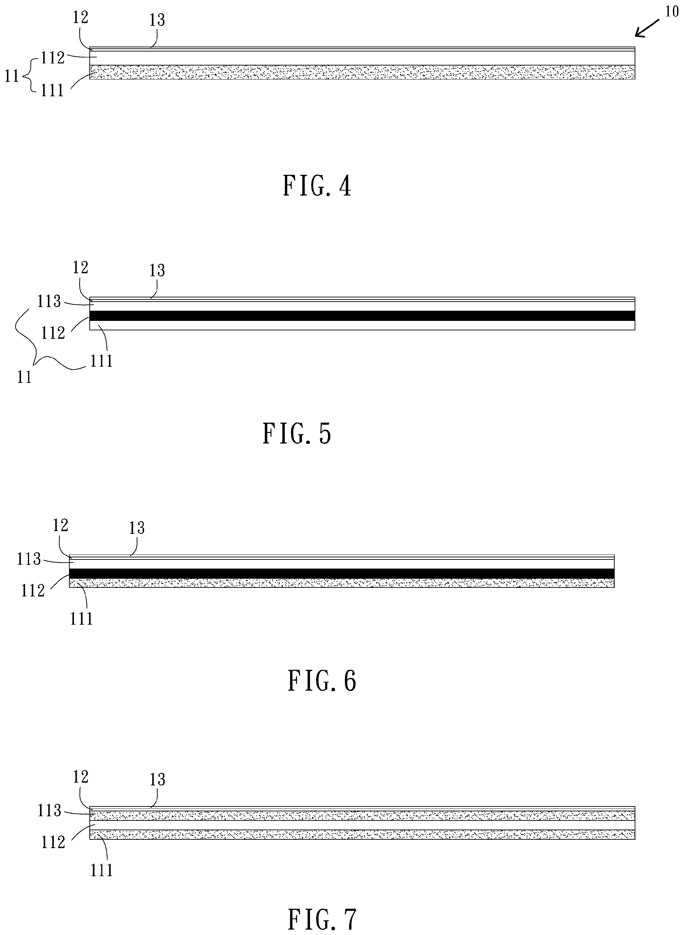

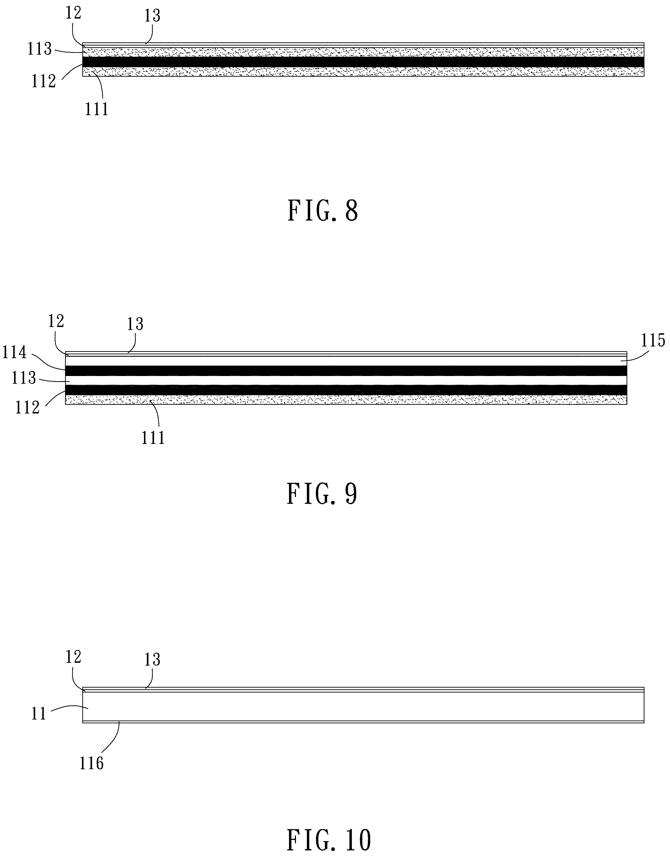

The method of forming the layering structure of the plastic flooring 10 comprises a step of:
A. forming the substrate 11, wherein the substrate 11 includes at least two sheets (i.e., a first sheet 111 and a second sheet 112) which are one-piece extrusion formed by using the extruder 20 so that the first sheet 111 and the second sheet 112 stack together. The extruder 20 is a plastic extruder and has at least one material feeder, and a number of the at least one material feeder corresponds to a number of the at least one sheet of the substrate 11. For example, the extruder 20 has a first material feeder 21, a second material feeder 22, and a third material feeder 23. Preferably, each of the at least one material feeder is configured to feed material made into each of the at least one sheet. In one embodiment, a material distributor 24 is configured to distribute the material into two of the at least one material feeder so that three sheets form on the substrate 11. In another embodiment, a material distributor 24 is configured to distribute the material into three of the at least one material feeder so that five sheets form on the substrate 11.
   Referring to FIG. 4, the substrate 11 includes a first sheet 111 made of PVC material in which plasticizer is added so that the first sheet 111 is flexible, and the substrate 11 includes a second sheet 112 located on the firs sheet 111 and made of PVC material in which the plasticizer is not added so that the second sheet 112 is stiff. Alternatively, the first sheet 111 is made of foam material in which polyvinyl chloride (PVC) and inert gas are added. In another embodiment, the first sheet 111 is made of foam material in which foaming agent is added so that the first sheet 1 is stiff, and the second sheet 112 is made of PVC material in which the plasticizer is added so that the second sheet 112 is flexible.
   As shown in FIG. 5, the substrate 11 includes a first sheet 111 made of PVC material in which plasticizer is not added so that the first sheet 111 is stiff, a second sheet 112 located on the first sheet 111 and made of PVC material in which vesicant is added so that the second sheet 112 is flexible, and a third sheet 113 located on the second sheet 112, wherein the third sheet 113 is made of PVC material in which the plasticizer is not added so that the third sheet 112 is stiff.
   As illustrated in FIG. 6, the substrate 11 includes a first sheet 111 made of PVC material in which plasticizer is added so that the first sheet 111 is flexible, a second sheet 112 located on the first sheet 112 and made of PVC material in which vesicant is added so that the second sheet 112 is flexible, and a third sheet 113 located on the second sheet 112, wherein the third sheet 113 is made of PVC material in which the plasticizer is not added so that the third sheet 112 is stiff.
   With reference to FIG. 7, the substrate 11 includes a first sheet 111 made of PVC material in which plasticizer is added so that the first sheet 111 is flexible, a second sheet 112 made of PVC material in which vesicant is not added so that the second sheet 112 is stiff, and a third sheet 113 located on the second sheet 112, wherein the third sheet 113 is made of PVC material in which the plasticizer is added so that the third sheet 112 is flexible.
   Referring to FIG. 8, the substrate 11 includes a first sheet 111 made of PVC material in which plasticizer is added or is not added, wherein when the plasticizer is added in the PVC material of the first sheet 111, the first sheet 111 is flexible, and when the plasticizer is not added in the PVC material of the first sheet 111, the first sheet 111 is stiff. In addition, the substrate 11 includes a second sheet 112 located on the first sheet 111 and made of PVC material in which inert gas is fed so that the second sheet 112 foams and is flexible, and a third sheet 113 located on the second sheet 112, wherein the third sheet 113 is made of PVC material in which the plasticizer is added or is not added, wherein when the plasticizer is added in the PVC material of the third sheet 113, the third sheet 113 is flexible, and when the plasticizer is not added in the PVC material of the third sheet 113, the third sheet 113 is stiff.
   As shown in FIG. 9, the substrate 11 includes a first sheet 111 made of PVC material in which plasticizer is added so that the first sheet 111 is flexible, a second sheet 112 located on the first sheet 111 and made of PVC material in which vesicant is added so that the second sheet 112 is flexible, a third sheet 113 located on the second sheet 112 and made of PVC material in which the vesicant and the plasticizer are not added so that the third sheet 113 is stiff, a fourth sheet 114 located on the third sheet 113 and made of PVC material in which the vesicant is added so that the fourth sheet 114 is flexible, and a fifth sheet 115 located on the fourth sheet 114, wherein the fifth sheet 115 is made of PVC material in which the vesicant and the plasticizer are not added so that the fifth sheet 115 is stiff.
   The method of forming the layering structure of the plastic flooring 10 comprises steps of:
B. delivering the printing layer 12, wherein the printing layer 12 has patterns printed thereon and is delivered to the roller unit 40 by using a first rolling mechanism 32, a first pressing mechanism 34, and a guiding mechanism 35 of the rolling conveyor 30.
C. conveying the abrasion resistant layer 13, wherein the abrasion resistant layer 13 is a transparent film and has abrasion resistance, and the abrasion resistant layer 13 is conveyed to the roller unit 40 by way of a second rolling mechanism 31 and a second pressing mechanism 33 of the rolling conveyor 30.
D. roll pressing the substrate 11, the printing layer 12, and the abrasion resistant layer 13 together by way of the roller unit 40 so as to form the plastic flooring 10, and the plastic flooring 10 is removed and cut based on required sizes. As shown in FIG. 10, the plastic flooring 10 comprises a first locking portion 14 and a second locking portion 15 which are formed on two opposite sides of the plastic flooring 10 which is cut is the step of D so that any two adjacent plastic floorings 10 are connected together by using a first locking portion 14 of one of the two adjacent plastic floorings 10 and a second locking portion 15 of the other plastic flooring 10.

The rolling conveyor 30 is mounted on and around a peripheral side of the roller unit 40, and the rolling conveyor 30 includes the second rolling mechanism 31 for rolling the abrasion resistant layer 13, the first rolling mechanism 32 for rolling the printing layer 12, the second pressing mechanism 33 for pressing the abrasion resistant layer 13, the first pressing mechanism 34 for pressing the printing layer 12, and a guiding mechanism 35 for guiding the printing layer 12. The abrasion resistant layer 13 is rolled, pressed, and delivered to the roller unit 40 by way of the second rolling mechanism 31 and the second pressing mechanism 33. The printing layer 12 is rolled, pressed, and delivered to the roller unit 40 by means of the first rolling mechanism 32, the first pressing mechanism 34, and the guiding mechanism 35.

The roller unit 40 includes four rollers (i.e., a first roller 42A, a second roller 42B, a third roller 43, and a fourth roller 44) and a support frame 41, wherein the first roller 42A is fixed on a lower end of the support frame 41, the second roller 42B is located on the first roller 42A, the third roller 43 is disposed above the second roller 42B, and the fourth roller 44 is secured on the third roller 43, such that the substrate 11 is extrusion formed by the extruder 20, and the printing layer 12 and the abrasion resistant layer 13 are rolled and pressed together by the rolling conveyor 30.

To deliver the printing layer 12 and the abrasion resistant layer 13 stably, between a delivery starting position of the printing layer 12 and a pressing position between the third roller 43 and the fourth roller 44 are defined a fifth roller 45 and a sixth roller 46, and between a delivery starting position of the abrasion resistant layer 13 and the pressing position between the third roller 43 and the fourth roller 44 are defined a seventh roller 47 and an eighth roller 48.

In the step D, the substrate 11 is guided into the roller unit 40 via the first roller 42A and the second roller 42B, and the substrate 11 is delivered across the third roller 43 and the fourth roller 44 along the second roller 42B. Before the substrate 11 is delivered across the third roller 43 and the fourth roller 44, the printing layer 12 and the abrasion resistant layer 13 are conveyed to the roller unit 40 by the rolling conveyor 30 so that the printing layer 12 stacks on the substrate 11, and the abrasion resistant layer 13 stacks on the printing layer 12, hence the substrate 11, the printing layer 12, and the abrasion resistant layer 13 are rolled and pressed together by the third roller 43 and the fourth roller 44 of the roller unit 40.

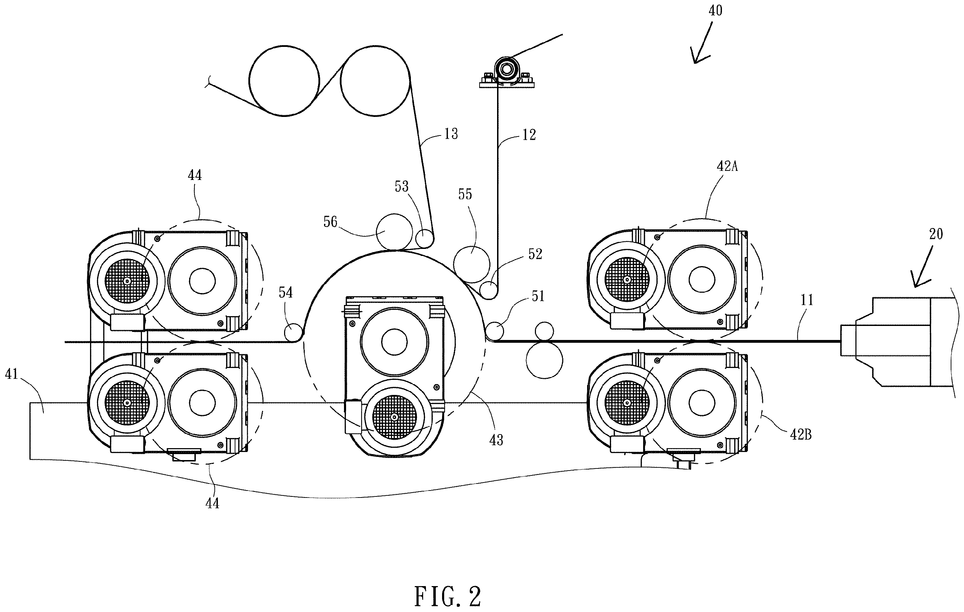

Alternatively, according to a preferred embodiment of the invention, as shown in FIG. 2, the roller unit 40 includes fifth rollers (i.e., a first roller 42A, a second roller 42B, a third roller 43, two fourth rollers 44, a first guide roller 51, a second guide roller 52, a third guide roller 53, a fourth guide roller 54, a first press roller 55, a second press roller 56, and a support frame 41.

In the step D, the substrate 11 is guided between the first roller 42A and the second roller 42B and is guided to the third roller 43 via the first guide roller 51, the printing layer 12 is guided to the third roller 43 via the guide roller 52 and the first press roller 55, and the abrasion resistant layer 13 is guided to the third roller 43 through the third guide roller 53 and the second press roller 56, hence the printing layer 12 stacks on the substrate 11, and the abrasion resistant layer 13 stacks on the printing layer 12 by using the third roller 43. Thereafter, the substrate 11, the printing layer 12, and the abrasion resistant layer 13 are guided to the two fourth rollers 44 via the fourth guide roller 54 so as to be rolled and pressed together by the roller unit 40.

Referring to FIG 10, a pattern part 116 is fixed on a bottom of the substrate 11 and is a PVC film configured to enhance anti-slip effect of the plastic flooring 10 and to reduce noises.

Preferably, the plastic flooring 10 is stiff and flexible and is manufactured in an automation manner.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the scope of the invention.

## Claims

1. A method of forming a layering structure of plastic flooring comprising steps of:
A. forming a substrate (11) by using an extruder (20) so as to one-piece extrusion form the substrate (11) including at least two sheets, wherein the at least two sheets are a first sheet (111) and a second sheet (112) which stack together;
B. delivering a printing layer (12), wherein the printing layer (12) has patterns printed thereon and is delivered to a roller unit (40) by using a first rolling mechanism (32) and a first pressing mechanism (34);
C. conveying a abrasion resistant layer (13), wherein the abrasion resistant layer (13) conveyed to the roller unit (40) by way of a second rolling mechanism (31) and a second pressing mechanism (33) of a rolling conveyor (30);
D. roll pressing the substrate (11), the printing layer (12), and the abrasion resistant layer (13) together by way of the roller unit (40) so as to form a plastic flooring (10),
wherein in step A, the substrate includes three sheets (111, 112, 113) which are one-piece extrusion formed by using an extruder (20) having a first material feeder (21), a second material feeder (22) and a third material feeder (23), wherein a material distributor (24) is configured to distribute a material into the first material feeder (21), the second material feeder (22) and the third material feeder (23) so that three sheets (111, 1112, 113) forms the substrate (11); and
steps B, C and D are carried out using a roller unit (40) that includes a first roller (42A), a second roller (42B), a third roller (43), two fourth rollers (44), and a support frame (41), wherein the first roller (42A) is fixed on an end of the support frame (41), the second roller (42B) is located on the first roller (42A), the third roller (43) is disposed beside the first roller (42A) and the second roller (42B), and the two fourth rollers (44) are secured beside the third roller (43) opposite to the first roller (42A) and the second roller (42B), wherein
the step D includes a first sub-step D1 in which the substrate (11) is guided between the first roller (42A) and the second roller (42B) and is guided to the third roller (43) via a first guide roller (51);
the step D includes a second sub-step D2 in which the printing layer (12) is guided to the third roller (43) via a guide roller (52) and a first press roller (55), and the abrasion resistant layer (13) is guided to the third roller (43) through a third guide roller (53) and a second press roller (56);
the step D includes a third sub-step D3 in which the printing layer (12) is stacked on the substrate (11), and the abrasion resistant layer (13) is stacked on the printing layer 12 by using the third roller (43), then the substrate (11), the printing layer (12), and the abrasion resistant layer (13) are guided to the two fourth rollers (44) via a fourth guide roller (54);
the step D includes a fourth sub-step D4 in which the substrate (11), the printing layer (12), and the abrasion resistant layer (13) are rolled and pressed together by the two fourth rollers (44) of the roller unit (40); and
the step D includes a fifth sub-step D5 in which the plastic flooring (10) is removed from the two fourth rollers (44) and is cut based on required sizes.

2. The method as claimed in claim 1, wherein the substrate (11) includes a first sheet (111) made of PVC material in which plasticizer is added so that the first sheet (111) is flexible, and the substrate (11) includes a second sheet (112) located on the first sheet and made of PVC material in which the plasticizer is not added so that the second sheet (112) is stiff.

3. The method as claimed in claim 1, wherein the substrate (11) includes a first sheet (111) and a second sheet (112), the first sheet (111) is made of PVC material in which inert gas is fed so as to foam the first sheet (111), and the second sheet (112) is made of PVC material in which the plasticizer is added so that the second sheet (112) is flexible.

4. The method as claimed in claim 1, wherein the substrate (11) includes a first sheet (111) and a second sheet (112), the first sheet (111) is made of foam material in which foaming agent is added so that the first sheet (111) is stiff, and the second sheet (112) is made of PVC material in which the plasticizer is added so that the second sheet (112) is flexible.

5. The method as claimed in claim 1, wherein the substrate (11) includes a first sheet (111) made of PVC material in which plasticizer is added so that the first sheet (111) is flexible, a second sheet (112) located on the first sheet (111) and made of PVC material in which vesicant is added so that the second sheet (112) is flexible, and a third sheet (113) located on the second sheet (112) and made of PVC material in which the plasticizer is not added so that the third sheet (113) is stiff.

6. The method as claimed in claim 1, wherein the substrate (11) includes a first sheet (111) made of PVC material in which plasticizer is added so that the first sheet (111) is flexible, a second sheet (112) made of PVC material in which vesicant is not added so that the second sheet (112) is stiff, and a third sheet (113) located on the second sheet (112) and made of PVC material in which the plasticizer is added so that the third sheet (113) is flexible.

7. The method as claimed in claim 1, wherein the substrate (11) includes a first sheet (111) made of PVC material in which plasticizer is added so that the first sheet (111) is flexible, a second sheet (112) located on the first sheet (111) and made of PVC material in which gas is fed so that the second sheet (112) foams and is flexible, and a third sheet (113) located on the second sheet (112) and made of PVC material in which the plasticizer is added so that the third sheet (113) is flexible.

8. The method as claimed in claim 1, wherein a pattern part (116) is fixed on a bottom of the substrate (11) and is a PVC film.

9. The method as claimed in claim 1, wherein the plastic flooring (10) further comprises a first locking portion (14) and a second locking portion (15) which are formed on two opposite sides of the plastic flooring (10) which is cut in the step of D so that any two adjacent plastic floorings (10) are connected together by using a first locking portion (14) of one of the two adjacent plastic floorings (10) and a second locking portion (15) of the other plastic flooring (10).

## Patentansprüche

1. Verfahren zum Bilden einer Schichtstruktur eines Kunststoff-Bodenbelags, folgende Schritte umfassend:
A. Bilden eines Substrats (11) unter Verwendung eines Extruders (20), so dass das Substrat (11), das mindestens zwei Bahnen beinhaltet, durch einstückige Extrusion gebildet wird, wobei die mindestens zwei Bahnen eine erste Bahn (111) und eine zweite Bahn (112) sind, die aufeinander gestapelt werden,
B. Ausgeben einer Druckschicht (12), wobei die Druckschicht (12) Muster aufweist, die darauf gedruckt sind, und unter Verwendung eines ersten Walzenmechanismus (32) und eines ersten Pressmechanismus (34) einer Walzeneinheit (40) zugeführt wird,
C. Befördern einer abriebfesten Schicht (13), wobei die abriebfeste Schicht (13) mit Hilfe eines zweiten Walzenmechanismus (31) und eines zweiten Pressmechanismus (33) eines Walzenförderers (30) zu der Walzeneinheit (40) befördert wird,
D. Walzenpressen des Substrats (11), der Druckschicht (12) und der abriebfesten Schicht (13) zusammen mit Hilfe der Walzeneinheit (40), so dass ein Kunststoff-Bodenbelag (10) gebildet wird, wobei:
in Schritt A das Substrat drei Bahnen (111, 112, 113) beinhaltet, die durch einstückige Extrusion unter Verwendung eines Extruders (20) gebildet werden, der eine erste Materialzufuhr (21), eine zweite Materialzufuhr (22) und eine dritte Materialzufuhr (23) aufweist, wobei ein Materialverteiler (24) dafür gestaltet ist, ein Material in die erste Materialzufuhr (21), die zweite Materialzufuhr (22) und die dritte Materialzufuhr (23) zu verteilen, so dass drei Bahnen (111, 112, 113) das Substrat (11) bilden, und
die Schritte B, C und D unter Verwendung einer Walzeneinheit (40) ausgeführt werden, die eine erste Walze (42A), eine zweite Walze (42B), eine dritte Walze (43), zwei vierte Walzen (44) und einen Stützrahmen (41) beinhaltet, wobei die erste Walze (42A) an einem Ende des Stützrahmens (41) befestigt ist, sich die zweite Walze (42B) an der ersten Walze (42A) befindet, die dritte Walze (43) neben der ersten Walze (42A) und der zweiten Walze (42B) angeordnet ist und die zwei vierten Walzen (44) neben der dritten Walze (43), gegenüber der ersten Walze (42A) und der zweiten Walze (42B) gesichert sind, wobei:
der Schritt D einen ersten Teilschritt D1 beinhaltet, in dem das Substrat (11) zwischen der ersten Walze (42A) und der zweiten Walze (42B) geführt wird und über eine erste Führungswalze (51) zu der dritten Walze (43) geführt wird,
der Schritt D einen zweiten Teilschritt D2 beinhaltet, in dem die Druckschicht (12) über eine Führungswalze (52) und eine erste Presswalze (55) zu der dritten Walze (43) geführt wird und die abriebfeste Schicht (13) durch eine dritte Führungswalze (43) und eine zweite Presswalze (56) zu der dritten Walze (43) geführt wird,
der Schritt D einen dritten Teilschritt D3 beinhaltet, in dem unter Verwendung der dritten Walze (43) die Druckschicht (12) auf das Substrat (11) gestapelt wird und die abriebfeste Schicht (13) auf die Druckschicht (12) gestapelt wird, wonach das Substrat (11), die Druckschicht (12) und die abriebfeste Schicht (13) über eine vierte Führungswalze (54) zu den zwei vierten Walzen (44) geführt werden,
der Schritt D einen vierten Teilschritt D4 beinhaltet, in dem das Substrat (11), die Druckschicht (12) und die abriebfeste Schicht (13) durch die zwei vierten Walzen (44) der Walzeneinheit (40) gewalzt und zusammengepresst werden, und
der Schritt D einen fünften Teilschritt D5 beinhaltet, in dem der Kunststoff-Bodenbelag (10) von den zwei vierten Walzen (44) abgenommen wird und basierend auf erforderlichen Größen zugeschnitten wird.

2. Verfahren nach Anspruch 1, wobei das Substrat (11) eine erste Bahn (111) beinhaltet, die aus PVC-Material besteht, dem Weichmacher zugesetzt wird, so dass die erste Bahn (111) flexibel ist, und das Substrat (11) eine zweite Bahn (112) beinhaltet, die sich auf der ersten Bahn befindet und aus PVC-Material besteht, dem kein Weichmacher zugesetzt wird, so dass die zweite Bahn (112) steif ist.

3. Verfahren nach Anspruch 1, wobei das Substrat (11) eine erste Bahn (111) und eine zweite Bahn (112) beinhaltet, wobei die erste Bahn (111) aus PVC-Material besteht, dem inertes Gas zugeführt wird, so dass die erste Bahn (111) aufgeschäumt wird, und die zweite Bahn (112) aus PVC-Material besteht, dem der Weichmacher zugesetzt wird, so dass die zweite Bahn (112) flexibel ist.

4. Verfahren nach Anspruch 1, wobei das Substrat (11) eine erste Bahn (111) und eine zweite Bahn (112) beinhaltet, wobei die erste Bahn (111) aus einem Schaummaterial besteht, dem ein Schaummittel zugesetzt wird, so dass die erste Bahn (111) steif ist, und die zweite Bahn (112) aus PVC-Material besteht, dem der Weichmacher zugesetzt wird, so dass die zweite Bahn (112) flexibel ist.

5. Verfahren nach Anspruch 1, wobei das Substrat (11) eine erste Bahn (111) beinhaltet, die aus PVC-Material besteht, dem Weichmacher zugesetzt wird, so dass die erste Bahn (111) flexibel ist, eine zweite Bahn (112), die sich auf der ersten Bahn (111) befindet und aus PVC-Material besteht, dem ein blasenbildendes Mittel zugesetzt wird, so dass die zweite Bahn (112) flexibel ist, und eine dritte Bahn (113), die sich auf der zweiten Bahn (112) befindet und aus PVC-Material besteht, dem kein Weichmacher zugesetzt wird, so dass die dritte Bahn (113) steif ist.

6. Verfahren nach Anspruch 1, wobei das Substrat (11) eine erste Bahn (111) beinhaltet, die aus PVC-Material besteht, dem Weichmacher zugesetzt wird, so dass die erste Bahn (111) flexibel ist, eine zweite Bahn (112), die aus PVC-Material besteht, dem kein blasenbildendes Mittel zugesetzt wird, so dass die zweite Bahn (112) steif ist, und eine dritte Bahn (113), die sich auf der zweiten Bahn (112) befindet und aus PVC-Material besteht, dem Weichmacher zugesetzt wird, so dass die dritte Bahn (113) flexibel ist.

7. Verfahren nach Anspruch 1, wobei das Substrat (11) eine erste Bahn (111) beinhaltet, die aus PVC-Material besteht, dem Weichmacher zugesetzt wird, so dass die erste Bahn (111) flexibel ist, eine zweite Bahn (112), die sich auf der ersten Bahn (111) befindet und aus PVC-Material besteht, dem Gas zugeführt wird, so dass die zweite Bahn (112) aufgeschäumt wird und flexibel ist, und eine dritte Bahn (113), die sich auf der zweiten Bahn (112) befindet und aus PVC-Material besteht, dem Weichmacher zugesetzt wird, so dass die dritte Bahn (113) flexibel ist.

8. Verfahren nach Anspruch 1, wobei ein Musterteil (116) an einem Boden des Substrats (11) befestigt ist und aus einer PVC-Folie besteht.

9. Verfahren nach Anspruch 1, wobei der Kunststoff-Bodenbelag (10) ferner einen ersten Arretierungsabschnitt (14) und einen zweiten Arretierungsabschnitt (15) umfasst, die an zwei gegenüberliegenden Seiten des Kunststoff-Bodenbelags (10) gebildet werden, der in dem Schritt D geschnitten wird, so dass zwei beliebige benachbarte Kunststoff-Bodenbeläge (10) unter Verwendung eines ersten Arretierungsabschnitts (14) von einem der zwei benachbarten Kunststoff-Bodenbeläge (10) und einem zweiten Arretierungsabschnitt (15) des anderen Kunststoff-Bodenbelags (10) miteinander verbunden werden.

## Revendications

1. Procédé de formation d'une structure en couches de revêtement de sol en matière plastique, comprenant les étapes :
A. former un substrat (11) à l'aide d'une extrudeuse (20) de façon à former, par extrusion monobloc, le substrat (11) comprenant au moins deux feuilles, les au moins deux feuilles étant une première feuille (111) et une deuxième feuille (112) qui s'empilent ensemble ;
B. délivrer une couche d'impression (12), la couche d'impression (12) ayant des motifs imprimés sur celle-ci et étant délivrée à une unité de rouleaux (40) à l'aide d'un premier mécanisme de roulement (32) et d'un premier mécanisme de pression (34) ;
C. transporter une couche résistant à l'abrasion (13), la couche résistant à l'abrasion (13) étant transportée jusqu'à l'unité de rouleaux (40) au moyen d'un second mécanisme de roulement (31) et d'un second mécanisme de pression (33) d'un transporteur à roulement (30) ;
D. presser par rouleaux le substrat (11), la couche d'impression (12) et la couche résistant à l'abrasion (13) ensemble au moyen de l'unité de rouleaux (40) de façon à former un revêtement de sol en plastique (10),
dans lequel
dans l'étape A, le substrat comprend trois feuilles (111, 112, 113) qui sont formées par extrusion monobloc à l'aide d'une extrudeuse (20) ayant un premier dispositif d'alimentation en matériau (21), un deuxième dispositif d'alimentation en matériau (22) et un troisième dispositif d'alimentation en matériau (23), un distributeur de matériau (24) étant configuré pour distribuer un matériau dans le premier dispositif d'alimentation en matériau (21), le deuxième dispositif d'alimentation en matériau (22) et le troisième dispositif d'alimentation en matériau (23) de telle sorte que trois feuilles (111, 112, 113) forment le substrat (11) ; et
les étapes B, C et D sont réalisées à l'aide d'une unité de rouleaux (40) qui comprend un premier rouleau (42A), un deuxième rouleau (42B), un troisième rouleau (43), deux quatrièmes rouleaux (44) et un cadre de support (41), le premier rouleau (42A) étant fixé sur une extrémité du cadre de support (41), le deuxième rouleau (42B) étant situé sur le premier rouleau (42A), le troisième rouleau (43) étant disposé à côté du premier rouleau (42A) et du deuxième rouleau (42B), et les deux quatrièmes rouleaux (44) étant fixés à côté du troisième rouleau (43) à l'opposé du premier rouleau (42A) et du deuxième rouleau (42B),
l'étape D comprenant une première sous-étape D1 dans laquelle le substrat (11) est guidé entre le premier rouleau (42A) et le deuxième rouleau (42B) et est guidé jusqu'au troisième rouleau (43) par l'intermédiaire d'un premier rouleau de guidage (51) ;
l'étape D comprenant une deuxième sous-étape D2 dans laquelle la couche d'impression (12) est guidée jusqu'au troisième rouleau (43) par l'intermédiaire d'un rouleau de guidage (52) et d'un premier rouleau presseur (55), et la couche résistant à l'abrasion (13) est guidée jusqu'au troisième rouleau (43) par l'intermédiaire d'un troisième rouleau de guidage (53) et d'un second rouleau presseur (56) ;
l'étape D comprenant une troisième sous-étape D3 dans laquelle la couche d'impression (12) est empilée sur le substrat (11), et la couche résistant à l'abrasion (13) est empilée sur la couche d'impression (12) à l'aide du troisième rouleau (43), puis le substrat (11), la couche d'impression (12) et la couche résistant à l'abrasion (13) sont guidés jusqu'aux deux quatrièmes rouleaux (44) par l'intermédiaire d'un quatrième rouleau de guidage (54) ;
l'étape D comprenant une quatrième sous-étape D4 dans laquelle le substrat (11), la couche d'impression (12) et la couche résistant à l'abrasion (13) sont laminés et pressés ensemble par les deux quatrièmes rouleaux (44) de l'unité de rouleaux (40) ; et
l'étape D comprenant une cinquième sous-étape D5 dans laquelle le revêtement de sol en plastique (10) est retiré des deux quatrièmes rouleaux (44) et est découpé sur la base de tailles requises.

2. Procédé selon la revendication 1, dans lequel le substrat (11) comprend une première feuille (111) faite d'un matériau PVC dans lequel du plastifiant est ajouté de telle sorte que la première feuille (111) est souple, et le substrat (11) comprend une deuxième feuille (112) située sur la première feuille et faite d'un matériau PVC dans lequel le plastifiant n'est pas ajouté de telle sorte que la deuxième feuille (112) est rigide.

3. Procédé selon la revendication 1, dans lequel le substrat (11) comprend une première feuille (111) et une deuxième feuille (112), la première feuille (111) est faite d'un matériau PVC dans lequel du gaz inerte est injecté de façon à rendre mousse la première feuille (111), et la deuxième feuille (112) est faite d'un matériau PVC dans lequel le plastifiant est ajouté de telle sorte que la deuxième feuille (112) est souple.

4. Procédé selon la revendication 1, dans lequel le substrat (11) comprend une première feuille (111) et une deuxième feuille (112), la première feuille (111) est faite d'un matériau mousse dans lequel de l'agent moussant est ajouté de telle sorte que la première feuille (111) est rigide, et la deuxième feuille (112) est faite d'un matériau PVC dans lequel le plastifiant est ajouté de telle sorte que la deuxième feuille (112) est souple.

5. Procédé selon la revendication 1, dans lequel le substrat (11) comprend une première feuille (111) faite d'un matériau PVC dans lequel du plastifiant est ajouté de telle sorte que la première feuille (111) est souple, une deuxième feuille (112) située sur la première feuille (111) et faite d'un matériau PVC dans lequel de l'agent vésicant est ajouté de telle sorte que la deuxième feuille (112) est souple, et une troisième feuille (113) située sur la deuxième feuille (112) et faite d'un matériau PVC dans lequel le plastifiant n'est pas ajouté de telle sorte que la troisième feuille (113) est rigide.

6. Procédé selon la revendication 1, dans lequel le substrat (11) comprend une première feuille (111) faite d'un matériau PVC dans lequel du plastifiant est ajouté de telle sorte que la première feuille (111) est souple, une deuxième feuille (112) faite d'un matériau PVC dans lequel de l'agent vésicant n'est pas ajouté de telle sorte que la deuxième feuille (112) est rigide, et une troisième feuille (113) située sur la deuxième feuille (112) et faite d'un matériau PVC dans lequel le plastifiant est ajouté de telle sorte que la troisième feuille (113) est souple.

7. Procédé selon la revendication 1, dans lequel le substrat (11) comprend une première feuille (111) faite d'un matériau PVC dans lequel du plastifiant est ajouté de telle sorte que la première feuille (111) est souple, une deuxième feuille (112) située sur la première feuille (111) et faite d'un matériau PVC dans lequel du gaz est injecté de telle sorte que la deuxième feuille (112) est rendue mousse et est souple, et une troisième feuille (113) située sur la deuxième feuille (112) et faite d'un matériau PVC dans lequel le plastifiant est ajouté de telle sorte que la troisième feuille (113) est souple.

8. Procédé selon la revendication 1, dans lequel une partie à motif (116) est fixée sur une partie inférieure du substrat (11) et est un film PVC.

9. Procédé selon la revendication 1, dans lequel le revêtement de sol en plastique (10) comprend en outre une première partie de verrouillage (14) et une seconde partie de verrouillage (15) qui sont formées sur deux côtés opposés du revêtement de sol en plastique (10) qui est découpé dans l'étape D de telle sorte que deux quelconques revêtements de sol en plastique (10) adjacents sont reliés ensemble à l'aide d'une première partie de verrouillage (14) de l'un des deux revêtements de sol en plastique (10) adjacents et d'une seconde partie de verrouillage (15) de l'autre revêtement de sol en plastique (10).
